# EUROPÄISCHE PATENTSCHRIFT

(11) **EP 2 181 323 B1**
(45) Veröffentlichungstag und Bekanntmachung des Hinweises auf die Patenterteilung: **28.09.2016**
(21) Anmeldenummer: 08787026.7
(22) Anmeldetag: 08.08.2008
(51) Int. Cl.: G01N 27/416, G05B 19/042

(54) **FELDGERÄT FÜR DIE PROZESSAUTOMATISIERUNG**
FIELD DEVICE FOR PROCESS AUTOMATION
APPAREIL DE CHAMP POUR L'AUTOMATISATION DES PROCESSUS

(30) Priorität: 21.08.2007 DE 102007039528
(43) Veröffentlichungstag der Anmeldung: 05.05.2010
(73) Patentinhaber: Endress + Hauser Conducta GmbH+Co. KG, 70839 Gerlingen (DE)
(72) Erfinder: WITTMER, Detlev, 75433 Maulbronn (DE); JAGIELLA, Manfred, 72622 Nürtingen-Reudern (DE)
(74) Vertreter: Andres, Angelika Maria
(86) Internationale Anmeldenummer: PCT/EP2008/060430
(87) Internationale Veröffentlichungsnummer: WO 2009/024482

(56) Entgegenhaltungen:
- EP-A- 1 380 907
- EP-A- 1 550 861
- WO-A-2004/049239
- WO-A-2005/106606
- DE-A1- 10 218 606
- DE-A1-102004 015 227

## Beschreibung

Die Erfindung betrifft ein Feldgerät für die Prozessautomatisierung, bestehend aus zumindest zwei miteinander koppelbaren bzw. gekoppelten Komponenten, wobei jeder der Komponenten eine Steuer-/Speichereinheit zugeordnet ist.

Aus der DE 102 18 606 A1 ist ein potentiometrischer Sensor bekannt geworden, der einen Elementarsensor mit einem digitalen Datenspeicher aufweist, wobei der Datenspeicher fest mit dem Sensor verbunden ist. In dem Datenspeicher sind Prozess- oder Sensordaten gespeichert. Der Sensor kommuniziert über eine Schnittstelle mit einer übergeordneten Einheit, z. B. einem Messumformer oder einem Kabel. Über die Schnittstelle überträgt der Sensor Messsignale, die den pH-Wert oder einen sonstigen Messwert repräsentieren. Weiterhin werden über die Schnittstelle Daten vom dem Datenspeicher gelesen bzw. auf den Datenspeicher geschrieben. Bevorzugt erfolgt über die Schnittstelle auch die Energieversorgung des Sensors.

Aus der DE 103 13 639 A1 ist ein vergleichbarer elektrochemischer Sensor bekannt geworden. Bei dem elektrochemischen Sensor handelt es sich beisplelsweise um einen Sauerstoffsensor. Entsprechende Sensoren mit induktiver Schnittstelle werden von der Anmelderin in unterschiedlichen Ausgestaltungen unter der Bezeichnung MEMOSENS oder mit Bezug auf die MEMOSENS-Technologie angeboten und vertrieben.

Die EP 1550861 offenbart ein Verfahren zur Bestimmung des Zustands einer Messsonde, die von Zeit zu Zeit ohne Ausbau gereinigt wird. Dabei wird unter anderem die Temperatur der Sonde gemessen und anhand des Temperaturverlauf der Zustand bestimmt. Die Messonde weist ein Speichermodu auf, das den Zustand speichert.

Die EP 1380907 beschreibt eine elektronische Einheit für ein Feldgerät der Prozessautomatisierung mit einem Mikroprozessor und einem Speicher. Die elektronische Einheit weist ferner eine Schnittstelle für eine Smart-Card auf, die den Mikroprozessor und/oder den Speicher bereit stellt.

Die WO 2004/049239 offenbart eine Verfahren zur Identifikation eines Benutzers bei Geräten der Prozessautomatisierung, wobei zumindest ein personenspeziffsches Merkmal des Benutzers mit einem Sensor erfasst wird und mit abgespeicherten Merkmalen verglichen wird. Die Erfassung des personenspezifisches Merkmal des Benutzers erfolgt etwa mit einer tragbaren Einheit mit einem elektronischen Schlüssel.

Die DE 1020047015227 beschreibt ein elektronisches Feldgerät. Dessen Gerätesoftware wird angepasst dadurch, dass durch eine Ein-/Ausgabebaugruppe von einer zentralen Steuerbaugruppe die Anzahl der Datenein- und/oder-ausgänge angegebenen Baugruppenparameter bereitgestellt werden. Die Ein-/Ausgabebaugruppe umfasst einen die Baugruppenparameter umfassenden Speicher.

Die WO 2005/106606 beschreibt ein elektronisches Feldgerät, wobei am Einsatzort des Feldgeräts ein Transponder angeordnet ist, der in einem Speicher Daten mit vorgegebenen Informationen für die Prozessumgebung des Feldgeräts enthältn, und dass das Feldgerät eine Leseeinheit zum berührungslosen Lesen der Daten und eine Auswerteeinheit zur Verwertung der Information für die von dem Feldgerät im Rahmen der Prozessautomatisierung auszuführenden Funktionen enthält.

Der Vollständigkeit halber sei erwähnt, dass das erfindungsgemäße Feldgerät keineswegs nur zur Messung und Überwachung von potentiometrischen oder elektrochemischen Prozessgrößen dient. Prinzipiell ist die Erfindung in Verbindung mit Feldgeräten einsetzbar, die eine physikalische oder chemische Prozessgröße ermitteln.

Messumformer der unterschiedlichen Hersteller mit dem bekannten Steckerkopf bzw. der bekannten Steckerkupplung verbunden werden können. Beispielsweise kann jeder Hersteller von Glaselektroden seine Glaselektroden an den MEMOSENS anschließen. Gleiches gilt für die Messumformer, die von einer Vielzahl von Herstellern angeboten und vertrieben werden.

Der Erfindung liegt die Aufgabe zugrunde, sicherzustellen, dass nur autorisierte bzw. lizenzierte Hersteller und Lieferanten eine neu- und einzigartige Technologie in einer definierten Bandbreite nutzen können.

Um zu verhindern, dass nicht autorisierte Hersteller von Sensorelementen und von Meßumformern die MEMOSENS-Technologie in Verbindung mit ihren Produkten nutzen, werden erfindungsgemäß zwei gleichwertige Lösungen vorgeschlagen.

Eine erste Ausgestaltung der erfindungsgemäßen Lösung weist die folgenden Merkmale auf:

In jeder Steuer-/Speichereinheit ist jeweils ein Parametersatz mit definierten Parametern abgelegt ist. Sobald die beiden Komponenten miteinander gekoppelt sind, liest und vergleicht zumindest eine der Steuer-/Speichereinheiten, die sog. vergleichende Steuer-/Speichereinheit, die in den einzelnen Steuer-/Speichereinheiten der Komponenten gespeicherten Parametersätze. Falls die Parametersätzen voneinander abweichen, stellt die vergleichende Steuer-/Speichereinheit den Steuer-/Speichereinheiten der miteinander gekoppelten Komponenten stets die Schnittmenge der Parameter der Parametersätze zur Verfügung. Somit ist sichergestellt, dass die einzelnen Komponenten nur die minimale gemeinsame Funktionalität erhalten.

Eine zweite Ausgestaltung der erfindungsgemäßen Lösung weist die folgenden Lösungsmerkmale auf:

Jeder Steuer-/Speichereinheit ist jeweils ein definierter Parametersatz zuge-ordnet, wobei jedem der Parametersätze eine eindeutige Charakterisierung in Form eines Levels 0, 1, 2, ... zugeordnet ist. Hierbei enthält ein höherer Level jeweils die Parameter des vorhergehenden Levels plus zusätzliche Parameter. Für den Fall, dass die Komponenten miteinander gekoppelt sind, liest und vergleicht zumindest eine der Steuer-/Speichereinheiten die in den Komponenten gespeicherten Level. Wenn die Level voneinander differieren, wird der Komponente bzw. den Komponenten mit einem höheren Level der Parametersatz der Komponente mit dem niedrigsten gemeinsamen Level zur Verfügung gestellt. Auch hier erhalten die in dem Messsystem integrierten einzelnen Komponenten nur den minimalen gemeinsamen Parametersatz, der jeder der Komponenten zugeordnet ist und der sich in einem definierten Level widerspiegelt.

Bezüglich der zuvor genannten ersten Lösung hat diese zweite Lösung noch einen bedeutenden Vorteil: die vergleichende Steuer-/Speichereinheit benötigt nur die Information über den Level, nicht aber die Information über die Parameter, die sich aktuell hinter dem jeweiligen Level verbergen. Kommen im Zuge der Weiterentwicklung des Feldgeräts zusätzliche Parameter zu den bereits vorhandenen Level hinzu oder wird gar ein zusätzlicher Level kreiert, so genügt es, der vergleichenden Steuer-/Speichereinheit die Information über den Level zur Verfügung zu stellen, unter dem die geänderten oder auch die zusätzlichen Parameter einzuordnen sind. Somit ist es möglich, auf ein Update oder eine Aktualisierung der Software in der vergleichenden Steuer-/Speichereinheit oder gar auf einen Austausch der Komponente, in der die vergleichende Steuer-/Speichereinheit angeordnet ist, zu verzichten.

Eine vorteilhafte Weiterbildung beider erfindungsgemäßer Lösung sieht vor, dass es sich bei dem Feldgerät um ein Messgerät handelt, das in der Analysemesstechnik einsetzbar ist.

Bevorzugt handelt es sich bei den Komponenten um einen Steckerkopf zur Aufnahme eines Elementarsensors, um eine Steckerkupplung und um einen Messumformer. Feldgeräte, die diese Aufteilung aufweisen, werden von der Anmelderin unter der Bezeichnung MEMOSENS angeboten und vertrieben. Beim MEMOSENS sind der Steckerkopf und die Steckerkupplung über eine induktive Schnittstelle miteinander koppelbar bzw. gekoppelt. Selbstverständlich kann die Kopplung auch optisch oder kapazitiv ausgestaltet sein. Möglich ist es auch, dass die beiden Komponenten der erfindungsgemäßen Lösungen über eine galvanische Schnittstelle miteinander verbunden sind.

Gemäß einer bevorzugten Ausgestaltung des erfindungsgemäßen Feldgeräts ist die Steuer-/Speichereinheit, die den Vergleich der Parametersätze oder der Level vornimmt, der Steckerkupplung zugeordnet. Die Steckerkupplung wird im Rahmen der MEMOSENS-Technologie oftmals auch als Kabel oder als primärseitiges Steckverbinderelement bezeichnet.

Um die Erfindung zu verdeutlichen, wird nachfolgend ein konkretes Beispiel genannt:

Das Sensorelement mit Steckerkopf wird über das intelligente Kabel bzw. die Steckerkupplung mit Kabel an einen Messumformer angeschlossen. Für den Messumformer ist eine Funktionalität mit dem Level 0 lizenziert. Level 0 is gleich bedeutend mit einer minimalen zur Verfügung stehenden Funktionalität. Das 'intelligente' Kabel, das die vergleichende Steuer-/Speichereinheit enthält, liest den Level aus dem Steckerkopf mit Sensorelement, z.B. Level 1, und den Level aus dem Messumformer, hier Level 0. Die vergleichende Steuer-/Speichereinheit in der Steckerkupplung bzw. im Kabel übermittelt erfindungsgemäß nur den Level 0 und somit nur die unter dem Level 0 eingeordneten Parametern an den Messumformer und den Steckerkopf. Erfindungsgemäß wird stets der gemeinsame niedrigste Level ermittelt bzw. die entsprechende Funktionalität freigegeben.

Wird derselbe Sensor - also Steckerkopf mit Sensorelement - an einem für Level 2 ausgelegten Messumformer betrieben, überträgt die Steckerkupplung bzw. das Kabel den Level 0 und den Level 1. In diesem Fall entspricht der Level 1 dem niedrigsten Level, der den einzelnen Komponenten gemeinsam ist. Die entsprechende Funktionalität des Levels 1 wird somit freigegeben und zur Verfügung gestellt. Die Steckerkupplung arbeitet erfindungsgemäß analog einem Gateway.

Gemäß einer bevorzugten Ausgestaltung der Erfindung enthält der Parametersatz, der dem Level 0 zugeordnet ist, definierte Grundfunktionen. Bei dem Parametersatz des Level 1 handelt es sich bevorzugt um Statusfunktionen und um aktuelle Zustandsdaten des Sensors. Dem Parametersatz des Level 2 sind Diagnosefunktionen zugeordnet und Funktionen, die beispielsweise Aussagen hinsichtlich der verbleibenden Lebensdauer des Sensors ermöglichen.

Die Erfindung wird anhand der nachfolgenden Figuren näher erläutert. Es zeigt:

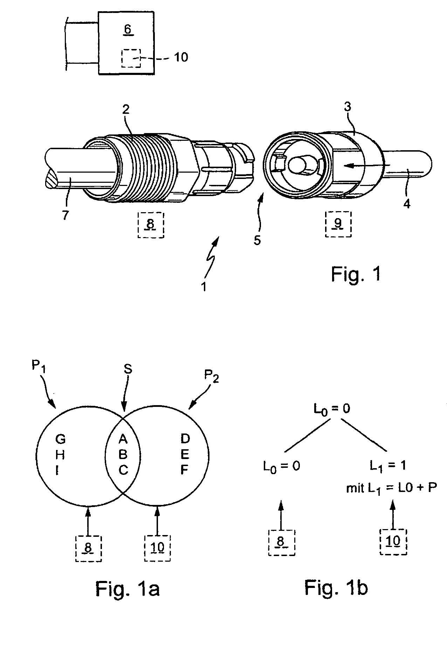

Fig. 1: eine schematische Darstellung der einzelnen Komponenten des erfindungsgemäßen Feldgeräts,
Fig. 1a: eine Darstellung der Schnittmenge der Parametersätze von zwei Komponenten und
Fig. 1b: eine Darstellung der Ermittlung des kleinsten gemeinsamen Levels von zwei Komponenten.

Fig. 1 zeigt eine schematische Darstellung der einzelnen Komponenten des erfindungsgemäßen Feldgeräts 1. Das erfindungsgemäße Feldgerät 1 weist drei miteinander koppelbare bzw. gekoppelte Komponenten auf: einen Steckerkopf 3 mit einem Sensorelement 4, eine Steckerkupplung 2 und einen Messumformer 6. Der Messumformer 6 und die Steckerkupplung 2 sind über ein Kabel 7 miteinander verbunden. In jeder der drei Komponenten: Steckerkopf 3, Steckerkupplung 2 und Messumformer 6 ist eine Steuer-/Speichereinheit 8, 9, 10 vorgesehen. Diese Steuer-/Speichereinheiten 8, 9, 10 sind in der Fig. 1 schematisch angedeutet.

Der Übersichtlichkeit halber sind in Fig. 1a lediglich die beiden Parameter-sätze *P*₁*, P*₂ dargestellt, die in den Steuer-/Speichereinheiten 8, 9 von Steckerkopf 3 und von der Steckerkupplung 2 abgespeichert sind. In *P*₁ sind die Parameter A, B, C, G, H, I abgelegt; in *P*₂ finden sich die Parameter A, B, C, D, E, F. Werden die Steckerkupplung 2, der Steckerkopf 3 und der Messumformer 6 miteinander gekoppelt, so liest die vergleichende Steuer-/Speichereinheit 8 - in diesem Fall ist die vergleichende Steuer-/Speicher-einheit 8 in die Steckerkupplung 2 integriert, - den in der Steuer-/Speichereinheiten 9 des Steckerkopfes 3 gespeicherten Parametersatz *P*₂ aus. Der Parametersatz *P*₂ wird mit dem Parametersatz *P*₁ verglichen, der in der Steuer-/Speichereinheit 8 der Steckerkupplung 2 gespeichert ist. Die Steuer-/Speichereinheit 8 vergleicht die beiden Parametersätze *P*₁, *P*₂ miteinander. Wenn die Parametersätze *P*₁, *P*₂ wie im gezeigten Fall voneinander abweichen, so ermittelt die vergleichende Steuer-/Speichereinheit 8 die übereinstimmende Schnittmenge S der Parametersätze *P*₁, *P*₂ und stellt nur diese den weiteren angeschlossenen Komponenten zur Verfügung.

Somit erhalten die einzelnen Komponenten 2, 3, 6 nur die Parameter bzw. die Funktionalität, für die eine Lizenz vorliegt. Einfach gesagt, stellt die vergleichende Steuer-/Speichereinheit 8 den gekoppelten Steuer-/Speichereinheiten 9, 10 die Frage: Was darfst du? bzw. welche Funktionalität hast du lizenziert? Letztendlich wird das aus mehreren Komponenten 2, 3, 6 zusammengesetzte Feldgerät 1 nur die Funktionalität erhalten, die der Schnittmenge S der den einzelnen Komponenten 2, 3, 6 erlaubten Funktionalität - hier sind es die Parameter A, B, C - entspricht.

Fig. 1b zeigt eine Darstellung der Ermittlung des kleinsten gemeinsamen Levels L von zwei Komponenten 2, 3. Ist den Parametern der Steckerkupplung 2 der Level 0 zugeordnet, der Lizenznehmer hat also nur eine Lizenz für die Grundfunktionen erworben, und weist der Steckerkopf 3 mit dem Elementarsensor 4 den Level 1 auf- d.h. der Steckerkopf 3 ist auch in der Lage, Statusfunktionen auszuführen - so wählt die vergleichende Steuer-/Speichereinheit 8 den Level aus, der beiden Einheiten 8, 9 gemeinsam ist: also den Level 0. Definitionsgemäß enthält hierbei der Level 1 die Parameter des Level 0 plus zusätzliche Parameter. In Verbindung mit der Steckerkupplung 2 und dem Messumformer 6 ist der Sensor 3, 4 in der Lage, lediglich Grundfunktionen durchzuführen, obwohl er von seinem gespeicherten Parametersatz dafür ausgelegt ist, auch Statusfunktionen durchzuführen. Für diese zusätzliche Funktionen fehlt jedoch die Lizenz, so dass die über die Grundfunktionen hinausgehenden Funktionen gesperrt sind.

Wie bereits an vorhergehender Stelle dargelegt, hat die Nutzung von verschiedenen Level den Vorteil, dass es genügt, wenn im Zuge der Weiterentwicklung des Feldgeräts 1 zusätzliche Parameter P zu den bereits vorhandenen Level 0, 1, 2, ... hinzukommen oder wenn gar zusätzlicher Level neu kreiert wird, der vergleichenden Steuer-/Speichereinheit 8 die Information über den Level zur Verfügung zu stellen, unter dem die geänderten oder auch die zusätzlichen Parameter P einzuordnen sind. Somit ist es möglich, auf ein Update oder eine Aktualisierung der Software in der vergleichenden Steuer-/Speichereinheit 8 oder gar auf einen Austausch der Komponente 2, in der die vergleichende Steuer-/Speichereinheit 8 angeordnet ist, zu verzichten.

### Bezugszeichenliste

- 1: Feldgerät
- 2: Steckerkupplung
- 3: Steckerkopf
- 4: Elementarsensor / Sensorelement
- 5: Sensorkupplung / intelligentes Kabel
- 6: Messumformer
- 7: Verbindungskabel
- 8: Steuer-/Speichereinheit
- 9: Steuer-/Speichereinheit
- 10: Steuer-/Speichereinheit

## Patentansprüche

1. Verfahren zur Kopplung von zumindest zwei miteinander koppelbaren Komponenten (2, 3, 6) eines Feldgeräts (1) für die Prozessautomatisierung, wobei in jeder der Komponenten (2, 3, 6) eine Steuer-/Speichereinheit (8, 9, 10) vorgesehen ist, in der jeweils ein Parametersatz (*Pₙ* mit n = 1, 2, 3, ..) mit definierten Parametern (A, B, C, ...) abgelegt ist, und wobei für den Fall, dass die zumindest zwei Komponenten (2, 3, 6) miteinander gekoppelt sind, zumindest eine der Steuer-/Speichereinheiten (8; 9; 10) die in den einzelnen Steuer-/Speicher-einheiten (8, 9, 10) der Komponenten (2, 3, 6) gespeicherten Parametersätze (*P*₁, *P*₂, *P*₃) liest und miteinander vergleicht, und wobei im Falle einer Abweichung in den Parametersätzen (*P*₁, *P*₂, *P*₃) die vergleichende Steuer-/Speichereinheit (8; 9; 10) den Steuer-/Speichereinheiten (8, 9, 10) der miteinander gekoppelten Komponenten (2, 3, 6) die Schnittmenge (S) der Parameter (A, B, C, ..) P) der Parametersätze (*P*₁, *P*₂, *P*₃) zur Verfügung stellt.

2. Verfahren zur Kopplung von zumindest zwei miteinander koppelbaren Komponenten (2, 3, 6) eines Feldgeräts (1) für die Prozessautomatisierung, wobei in jeder der Komponenten (2, 3, 6) jeweils eine Steuer-/Speichereinheit (8, 9, 10) vorgesehen ist, wobei jeder Steuer-/Speichereinheit (8, 9, 10) jeweils ein definierter Parametersatz (*P*ₙ mit n = 1, 2, 3 ...) zugeordnet ist, wobei jedem der Parametersätze (*P*₁, *P*₂*, P*₃) eine eindeutige Charakterisierung in Form eines Levels *Lₙ* mit n = 0, 1, 2 zugeordnet ist, wobei ein höherer Level (*Lₙ₊ₘ*) mit m = 1, 2, 3 jeweils die Parameter (A, B, C, ...) des niedrigeren Levels (*Lₙ*) und zusätzliche Parameter P (X, Y, ..) enthält, wobei für den Fall, dass die Komponenten (2, 3, 6) miteinander gekoppelt sind, zumindest eine der Steuer-/Speichereinheiten (8, 9, 10) die in den Komponenten (2, 3, 6) gespeicherten Level (*Lₙ*) liest und miteinander vergleicht und im Falle einer Abweichung der Komponente bzw. den Komponenten (2, 3, 6) mit einem höheren Level *Lₙ₊ₘ* den Parametersatz der Komponente (2; 3; 6) mit dem niedrigsten Level (*L*ₘᵢₙ) zur Verfügung stellt.

3. Verfahren nach Anspruch 1 oder 2,
wobei es sich bei dem Feldgerät (1) um ein Messgerät handelt, das in der Analysemesstechnik einsetzbar ist.

4. Verfahren nach Anspruch 1, 2 oder 3,
wobei es sich bei den Komponenten (2, 3,6) um einen Steckerkopf (3) zur Aufnahme eines Elementarsensors (4), um eine Steckerkupplung (2) und um einen Messumformer (6) handelt.

5. Verfahren nach Anspruch 4,
wobei der Steckerkopf (3) und die Steckerkupplung (2) über eine nicht galvanische oder eine galvanische Schnittstelle (5) miteinander koppelbar sind.

6. Verfahren nach Anspruch 4,
wobei die Steuer-/Speichereinheit (9), die den Vergleich der Parametersätze (P) oder der Level (L) vornimmt, der Steckerkupplung (2) zugeordnet ist.

7. Verfahren nach einem oder mehreren der vorhergehenden Ansprüche,
wobei es sich bei dem Parametersatz (P) des Level L = 0 um Grundfunktionen des Feldgeräts (1) handelt.

8. Verfahren nach einem oder mehreren der vorhergehenden Ansprüche,
wobei es sich bei dem Parametersatz (P) des Level L = 1 um Statusfunktionen bzw. um aktuelle Zustandsdaten des Feldgeräts (1) handelt.

9. Verfahren nach einem oder mehreren der vorhergehenden Ansprüche,
wobei es sich bei dem Parametersatz (P) des Level 2 um Diagnosefunktionen oder um Daten handelt, die es erlauben, die verbleibende Lebensdauer des Feldgeräts (1) abzuschätzen.

## Claims

1. Procedure for coupling at least two interconnectable components (2, 3, 6) of a field device (1) for process automation,
wherein a control/memory unit (8, 9, 10) is provided in each of the components (2, 3, 6) and a parameter set (*P*ₙ where n = 1, 2, 3, etc.) with defined parameters (A, B, C, etc.) is stored in each control/memory unit, and wherein if the at least two components (2, 3, 6) are coupled with one another at least one of the control/memory units (8, 9, 10) reads the parameter sets (*P*₁*, P*₂, *P*₃) saved in the individual control/memory units (8, 9, 10) of the components (2, 3, 6) and compares them with one another, and wherein in the event of a difference in the parameter sets (*P*₁, *P*₂, *P*₃) the control/memory unit (8, 9, 10) performing the comparison provides the control/memory units (8, 9, 10) of the interconnected components (2, 3, 6) with the intersection (S) of the parameters (A, B, C, etc.) in the parameter sets (*P*₁, *P*₂, *P*₃).

2. Procedure for coupling at least two interconnectable components (2, 3, 6) of a field device (1) for process automation, wherein a control/memory unit (8, 9, 10) is provided in each of the components (2, 3, 6), wherein a defined parameter set (*P*ₙ where n = 1, 2, 3, etc.) is assigned to each control/memory unit (8, 9, 10), wherein a unique characterization in the form of a level *L*ₙ where n = 0, 1, 2 is assigned to each of the parameter sets (*P*₁, *P*₂, *P*₃), wherein a higher level (*L*ₙ₊ₘ), where m = 1, 2, 3, contains the parameters (A, B, C, etc.) of the lower level (*L*ₙ) and additional parameters (X, Y, etc.),
wherein if the components are coupled with one another (2, 3, 6) at least one of the control/memory units (8, 9, 10) reads the levels (*L*ₙ) saved in the components (2, 3, 6) and compares them with one another and in the event of a difference provides the parameter set of the component (2, 3, 6) with the lowest level (*L*ₘᵢₙ) to the component or components (2, 3, 6) with a higher level *L*ₙ₊ₘ.

3. Procedure as claimed in Claim 1 or 2,
wherein the field device (1) is a measuring device that can be used in analytical measuring technology.

4. Procedure as claimed in Claim 1, 2 or 3,
wherein the components (2, 3, 6) constitute a connector head (3) to hold an elementary sensor (4), a connector coupling (2) and a transmitter (6).

5. Procedure as claimed in Claim 4,
wherein the connector head (3) and the connector coupling (2) can be coupled with one another via a non-galvanic or galvanic interface (5).

6. Procedure as claimed in Claim 4,
wherein the control/memory unit (9), which performs the comparison of the parameter sets (P) or the levels (L), is assigned to the connector coupling (2).

7. Procedure as claimed in one or more of the previous claims,
wherein the parameter set (P) of level L = 0 constitutes basic functions of the field device (1).

8. Procedure as claimed in one or more of the previous claims,
wherein the parameter set (P) of level L = 1 constitutes status functions or current status data of the field device (1).

9. Procedure as claimed in one or more of the previous claims,
wherein the parameter set (P) of level 2 constitutes diagnostic functions or data that make it possible to estimate the remaining life of the field device (1).

## Revendications

1. Procédé destiné au couplage d'au moins deux composants (2, 3, 6) couplables entre eux d'un appareil de terrain (1) destiné à l'automatisation des process, pour lequel est prévue dans chacun des composants (2, 3, 6) une unité de commande / mémoire (8, 9, 10), dans laquelle est enregistrée respectivement un jeu de paramètres (*P*ₙ avec n = 1, 2, 3, etc.) avec des paramètres (A, B, C, etc.) définis, et pour lequel, pour le cas où les au moins deux composants (2, 3, 6) sont couplés entre eux, au moins l'une des unités de commande / mémoire (8, 9, 10) lit et compare entre eux les jeux de paramètres (*P*₁, *P*₂, *P*₃) enregistrés dans les différentes unités de commande / mémoire (8, 9, 10) des composants (2, 3, 6), et pour lequel, en cas de différences entre les jeux de paramètres (*P*₁, *P*₂, *P*₃), l'unité de commande / mémoire (8, 9, 10) comparative met à la disposition des unités de commande / mémoire (8, 9, 10) des composants (2, 3, 6) couplés entre eux l'intersection d'ensembles (S) des paramètres (A, B, C, etc.) des jeux de paramètres (*P*₁, *P*₂, *P*₃).

2. Procédé destiné au couplage d'au moins deux composants (2, 3, 6) couplables entre eux d'un appareil de terrain (1) destiné à l'automatisation des process, pour lequel est prévue dans chacun des composants (2, 3, 6) une unité de commande / mémoire (8, 9, 10), un jeu de paramètres (*P*ₙ avec n = 1, 2, 3, etc.) défini étant respectivement attribué à chaque unité de commande / mémoire (8, 9, 10), une caractérisation univoque sous la forme d'un niveau *L*ₙ avec n = 0, 1, 2 étant attribuée à chaque jeu de paramètres (*P*₁, *P*₂, *P*₃), un niveau supérieur (*L*ₙ₊ₘ) avec m = 1, 2, 3 contenant respectivement les paramètres (A, B, C, etc.) du niveau inférieur (*L*ₙ) et des paramètres supplémentaires (X, Y, etc.),
pour lequel, pour le cas où les composants (2, 3, 6) sont couplés entre eux, au moins l'une des unités de commande / mémoire (8, 9, 10) lit les niveaux (*L*ₙ) enregistrés dans les composants (2, 3, 6) et les compare entre eux et, en cas de différences entre le composant ou les composants (2, 3, 6) et un niveau supérieur *L*ₙ₊ₘ, met à disposition le jeu de paramètres des composants (2, 3, 6) avec le niveau inférieur (*L*ₘᵢₙ).

3. Procédé selon la revendication 1 ou 2,
pour lequel il s'agit, concernant l'appareil de terrain (1), d'un appareil de mesure utilisable dans la technique de mesure d'analyse.

4. Procédé selon la revendication 1, 2 ou 3,
pour lequel il s'agit, concernant les composants (2, 3, 6), d'une tête de connecteur (3) destinée à recevoir un capteur élémentaire (4), d'un connecteur femelle (2) et d'un transmetteur (6).

5. Procédé selon la revendication 4,
pour lequel la tête de connecteur (3) et le connecteur femelle (2) sont couplables entre eux par l'intermédiaire d'une interface (5) non galvanique ou galvanique.

6. Procédé selon la revendication 4,
pour lequel l'unité de commande / mémoire (9), qui procède à la comparaison des jeux de paramètres (P) ou des niveaux (L), est attribuée au connecteur femelle (2).

7. Procédé selon l'une ou plusieurs des revendications précédentes,
pour lequel il s'agit, concernant le jeu de paramètres (P) du niveau L = 0, de fonctions de base de l'appareil de terrain (1).

8. Procédé selon l'une ou plusieurs des revendications précédentes,
pour lequel il s'agit, concernant le jeu de paramètres (P) du niveau L = 1, de fonctions d'état ou de données d'état actuelles de l'appareil de terrain (1).

9. Procédé selon l'une ou plusieurs des revendications précédentes,
pour lequel il s'agit, concernant le jeu de paramètres (P) du niveau 2, de fonctions de diagnostic ou de données, qui permettent d'évaluer la durée de vie restante de l'appareil de terrain (1).
